# EUROPEAN PATENT APPLICATION

(11) **EP 4 686 234 A1**
(43) Date of publication of application: **28.01.2026**
(21) Application number: 24777487.0
(22) Date of filing: 29.01.2024
(51) Int. Cl.: H04W 4/44, H04W 36/00, G01C 21/26, H04W 88/16, H04W 4/021

(54) **VEHICLE-TO-EVERYTHING COMMUNICATION METHOD, APPARATUS, AND STORAGE MEDIUM**

(30) Priority: 27.03.2023 CN 202310358749
(71) Applicant: ZTE Corporation, Shenzhen, Guangdong 518057 (CN)
(72) Inventor: HUANG, Cheng, Shenzhen, Guangdong 518057 (CN); CHEN, Xiao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/074442
(87) International publication number: WO 2024/198692

(57) **Abstract**

Provided are a vehicle-to-everything communication method, an apparatus, and a storage medium. The vehicle-to-everything communication method is applied to a first roadside unit of a first communication network, and the service range of the first roadside unit and the service range of a second roadside unit of a second communication network have an overlapping area. The vehicle-to-everything communication method comprises: detecting that a first vehicle-mounted unit moves into the service range of the first roadside unit (S101); and in response to detecting that the first vehicle-mounted unit moves into the service range of the first roadside unit, sending first information to the first vehicle-mounted unit (S102), the first information being used for indicating that there is a vehicle-to-everything service provided by the second roadside unit.

## Description

The present disclosure claims a priority to Chinese Patent Application No. 202310358749.2, filed on March 27, 2023, which is hereby incorporated by reference in its entirety.

### TECHNICAL FIELD

The present disclosure relates to the technical field of vehicle-to-everything technology, and in particular, to a vehicle-to-everything communication method, apparatus, and a storage medium.

### BACKGROUND

With the continuous development of information technology, vehicle-to-everything (V2X), as a new generation of information and communication technology that crosses fields of communication, vehicle, and transportation, etc., has become a highly promising research hotspot. As the main candidate technology for global vehicle-to-everything, cellular vehicle-to-everything (C-V2X) technology is also receiving increasing attention. At present, many demonstrations of vehicle-to-everything applications based on C-V2X technology have been carried out in various areas.

### SUMMARY

In one aspect, a vehicle-to-everything communication method is provided in the embodiments of the present disclosure, which is applied to a first road side unit in a first communication network, where there is an overlapped area between a service range of the first road side unit and a service range of a second road side unit in a second communication network. The vehicle-to-everything communication method includes:
detecting that a first on board unit moves into the service range of the first road side unit;
in response to detecting that the first on board unit moves into the service range of the first road side unit, sending first information to the first on board unit, where the first information is used to indicate that there is a vehicle-to-everything service provided by the second road side unit.

In another aspect, a vehicle-to-everything communication method is provided in the embodiments of the present disclosure, which is applied to an on board unit. The vehicle-to-everything communication method includes:
after the on board unit moves into a service range of a first road side unit in a first communication network, receiving first information sent from the first road side unit, where the first information is used to indicate that there is a vehicle-to-everything service provided by a second road side unit in a second communication network, and there is an overlapped area between the service range of the first road side unit and a service range of the second road side unit;
choosing at least one of the first road side unit and the second road side unit to perform communication based on the first information.

In yet another aspect, a vehicle-to-everything communication method is provided in the embodiments of the present disclosure, which is applied to a first road side unit in a first communication network, where there is an overlapped area between a service range of the first road side unit and a service range of a second road side unit in a second communication network. The vehicle-to-everything communication method includes:
receiving first service information related to the first on board unit sent from the second road side unit;
determining whether the first on board unit meets a preset condition, where the preset condition includes a service state of the first on board unit being an active state;
in response to that the first on board unit meets the preset condition, discarding the first service information; or in response to that the first on board unit does not meet the preset condition, sending the first service information to the second on board unit whose service state is an active state.

In yet another aspect, a vehicle-to-everything communication method is provided in the embodiments of the present disclosure, which is applied to an on board unit. The vehicle-to-everything communication method includes:
sending first service information through a first communication interface;
sending the first service information through a second communication interface;
where the first communication interface is an interface used for communication with a first road side unit in a first communication network, and the second communication interface is an interface used for communication with a second road side unit in a second communication network; there is an overlapped area between a service range of the first road side unit and a service range of the second road side unit.

In yet another aspect, a communication apparatus is provided in the embodiments of the present disclosure. The communication apparatus includes:
a processing module, configured to detect that a first on board unit moves into a service range of a first road side unit in a first communication network;
a communication module, configured to send first information to the first on board unit in response to detecting that the first on board unit moves into the service range of the first road side unit, where the first information is used to indicate that there is a vehicle-to-everything service provided by the second road side unit in a second communication network, and there is an overlapped area between a service range of the first road side unit and a service range of the second road side unit.

In yet another aspect, a communication apparatus is provided in the embodiments of the present disclosure. The communication apparatus includes:
a communication module, configured to receive first information sent from the first road side unit after the on board unit moves into a service range of a first road side unit in a first communication network; wherein the first information is used to indicate that there is a vehicle-to-everything service provided by a second road side unit in a second communication network; there is an overlapped area between a service range of the first road side unit and a service range of the second road side unit;
a processing module, configured to choose at least one of the first road side unit and the second road side unit to perform communication.

In yet another aspect, a communication apparatus is provided in the embodiments of the present disclosure. The communication apparatus includes:
a communication module, configured to receive first service information related to a first on board unit sent from a second road side unit;
a processing module, configured to determine whether the first on board unit meets a preset condition, where the preset condition includes a service state of the first on board unit being an active state; in response to that the first on board unit meets the preset condition, discard the first service information; or in response to that the first on board unit does not meet the preset condition, send the first service information to the second on board unit whose service state is an active state.

In yet another aspect, a communication apparatus is provided in the embodiments of the present disclosure. The communication apparatus includes:
a communication module, configured to send first service information through a first communication interface;
the communication module is further configured to send the first service information through a second communication interface.

In yet another aspect, a communication apparatus is provided in the embodiments of the present disclosure. The communication apparatus includes: a memory and a processor; where the memory is coupled to the processor; the memory is configured to store instructions executable for the processor; the processor, upon executing the instructions, enables the communication apparatus to implement the method according to any one of the above-mentioned aspects.

In yet another aspect, a computer-readable storage medium is provided in the embodiments of the present disclosure. The computer-readable storage medium stores computer program instructions, where the computer program instructions, upon being executed by a computer, enable the computer to implement the method according to any one of the above-mentioned aspects.

In yet another aspect, a computer program product is provided in the embodiments of the present disclosure. The computer program product includes computer program instructions, where the computer program instructions, upon being executed by a computer, enable the computer to implement the method according to any one of the above-mentioned aspects.

### BRIEF DESCRIPTION OF THE DRAWINGS

In order to illustrate technical solutions in the present disclosure more clearly, the accompanying drawings needs to be used in the embodiments of the present disclosure will be introduced briefly as follows. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of an architecture of a communication system according to some embodiments.
FIG. 2 is a flowchart of a vehicle-to-everything communication method according to some embodiments.
FIG. 3 is a flowchart of another vehicle-to-everything communication method according to some embodiments.
FIG. 4 is a flowchart of yet another vehicle-to-everything communication method according to some embodiments.
FIG. 5 is a flowchart of yet another vehicle-to-everything communication method according to some embodiments.
FIG. 6 is a flowchart of yet another vehicle-to-everything communication method according to some embodiments.
FIG. 7 is a schematic diagram of a scenario of a vehicle-to-everything communication method according to some embodiments.
FIG. 8 is a schematic diagram of another scenario of a vehicle-to-everything communication method according to some embodiments.
FIG. 9 is a schematic diagram of yet another scenario of a vehicle-to-everything communication method according to some embodiments.
FIG. 10 is a schematic diagram of yet another scenario of a vehicle-to-everything communication method according to some embodiments.
FIG. 11 is a schematic diagram of yet another scenario of a vehicle-to-everything communication method according to some embodiments.
FIG. 12 is a schematic diagram of yet another scenario of a vehicle-to-everything communication method according to some embodiments.
FIG. 13 is a structural schematic diagram of a communication apparatus according to some embodiments.
FIG. 14 is a structural schematic diagram of another communication apparatus according to some embodiments.

### DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplarily" or "for example" and variations thereof are used to indicate examples, instances, or illustrations. Any embodiment or design solution described in the present disclosure with wordings such as "exemplarily" or "for example" should not be illustrated as more preferred or advantageous embodiment or design solution over other embodiments or design solutions. Specifically, the usage of the wordings such as "exemplarily" or "for example" is intended to present relevant concepts in a concrete way.

Hereinafter, terms "first" and "second," etc., are used for descriptive purposes only, and are not to be understood as indicating or implying the relative importance or implicitly indicating a number of indicated technical features. Thus, features limited with wordings like "first" or "second," etc., may explicitly or implicitly include one or more of the feature(s).

In the description of the present disclosure, unless otherwise specified, "/" means an "or" relationship, for example, "A/B" may represent A or B. The term "and/or" in the description is merely a relevant relationship for describing related objects, which represents that there may be three relationships. For example, A and/or B may represent: only A; only B; or both A and B. In addition, a wording "at least one" represents a number of one or more, and "a plurality of" represents a number more than two.

With the continuous development of information technology, vehicle-to-everything (V2X), as a new generation of information and communication technology that crosses fields of communication, vehicle, and transportation, has become a highly promising research hotspot. As the main candidate technology for global vehicle-to-everything, cellular vehicle-to-everything (C-V2X) technology is also receiving increasing attention.

For ease of understanding, a brief introduction to V2X and C-V2X technologies is illustrated as follows.
(1) V2X
   V2X is an abbreviation for vehicle-to-everything, which is used to implement comprehensive communication among on board units, surrounding environment and network. For example, V2X may implement any communication and interconnection between vehicles to vehicle-to-vehicle (V2V), vehicle-to-infrastructure (V2I), vehicle-to-pedestrian (V2P), and vehicle-to-network (V2N).
(2) C-V2X
   C-V2X is an abbreviation for cellular vehicle-to-everything, which is a vehicle-to-everything technology that integrates cellular communication and direct communication.

In the C-V2X that integrates direct communication, data transmission may be performed between terminals (e.g., on board units, road side units, etc.) through a PC5 interface of the direct link, enabling communication and interconnection such as V2V, V2I, and V2P without passing through a base station, supporting two scenarios: within cellular coverage and outside cellular coverage. In some embodiments, a PC5 interface is used to perform communication in the C-V2X that integrates direct communication. In some embodiments, the above-mentioned C-V2X that integrates direct communication may be a PC5 network. In some embodiments, a communication manner between various terminals in the PC5 network may be PC5 broadcasting. It should be understood that in the C-V2X that integrates direct communication, deploying a brand new PC5 V2X network faces problems such as excessive investment in full coverage, low user penetration rate of an on board unit (OBU) using a PC5 interface, and poor operational capabilities, making it difficult to put the C-V2X technology that integrates direct communication into large-scale use.

In the C-V2X that integrates cellular communication, V2N communication may be implemented between a terminal (e.g., on board units, road side units, etc.) and a base station through a Uu interface, and V2V, V2I, and V2P communication may be implemented based on data forwarding from the base station. In some embodiments, a cellular communication interface (e.g., a Uu interface) is used in the C-V2X that integrates cellular communication to perform communication. In some embodiments, as a cellular mobile communication system evolves from 4G to 5G, the C-V2X further includes LTE-V2X and NR-V2X. It can be understood that with the evolution of communication systems, the C-V2X may further include other vehicle-to-everything technologies suitable for future communication technologies. In some embodiments, the above-mentioned C-V2X that integrates with cellular communication may be a 5G network. For example, with the popularization of 5G network infrastructure and terminals, the C-V2X that integrates with cellular communication may be built by using the existing 5G base station computing resources of operators and multi-access edge computing (MEC) computing resources based on 5G Uu interface communication manner.

However, the V2X and C-V2X in some technologies still face some issues. In the actual deployment process of vehicle-to-everything in the future, there may be multiple types of communication networks coexisting and providing services. For example, there may be PC5 networks and 5G networks. However, in the case where an on board unit crosses different types of communication networks, there may be service interruptions or reduced service continuity of the on board unit.

In this regard, a vehicle-to-everything communication method is provided in the embodiments of the present disclosure, which may be used to ensure the service continuity when the on board unit crosses different types of communication networks. The method includes: detecting that a first on board unit moves into a service range of a first road side unit; in response to detecting that the first on board unit moves into the service range of the first road side unit, sending first information to the first on board unit, where the first information is used to indicate that there is a vehicle-to-everything service provided by a second road side unit.

It should be noted that the vehicle-to-everything communication method provided in the present disclosure may be applied to systems in various communication standards. For example, the method provided in the embodiments of the present disclosure may be applicable to systems, including but not limited to, a long term evolution (LTE) system, various versions based on LTE advanced, a 5G system, and a new radio (NR), or other next generation communication systems. In addition, the method provided in the embodiments of the present disclosure may further be applicable to future-oriented communication technologies, etc.

A network architecture of a communication network in the embodiments of the present disclosure may include a road side unit (e.g., including road side units in different communication networks) and terminals (e.g., including but not limited to on board units). In some embodiments, the network architecture may also include a server (e.g., a server or core network).

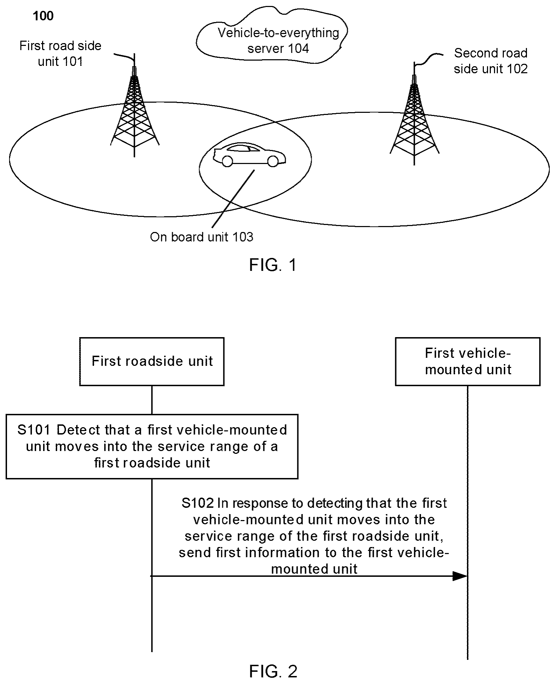

For example, FIG. 1 shows a schematic diagram of an architecture of a communication system. Referring to FIG. 1, the communication system 100 may include, but not limited to, a road side unit (e.g., a first road side unit 101, a second road side unit 102 in FIG. 1) and an on board unit (e.g., an on board unit 103 in FIG. 1). In some embodiments, still as shown in FIG. 1, the communication system 100 further includes a server (such as a vehicle-to-everything server 104 in FIG. 1).

A road side unit is a device installed on a road side to implement the V2X communication. For example, the road side unit may be a base station itself. As another example, the road side unit may include at least one of: a large-scale of active antenna units (AAUs) that constitutes a base station, a building base band unit (BBU), or a radio remote unit (RRU). As another example, the road side unit may also be a road side sensing system. As another example, the road side unit may also be other devices with service functions (such as data transmission and reception) and/or management functions. As another example, the road side unit may be a virtual road side unit (vRSU). As another example, the road side unit may also be a device in the form of a camera, a laser radar, a millimeter wave radar, or an industrial computer. In some embodiments, the road side unit may also be a combination of one or more of the above items. It should be understood that forms or functions of the road side unit mentioned above are merely examples, which are not limited in the present disclosure. The road side unit may be deployed together with a traffic light, a solar street light, a tree, a building, an apparatus, a base station, or a utility pole in a scene, or may be independently deployed in the scene, which is not limited in the present disclosure. In some embodiments, an interface supported by the road side unit are related to a communication network where the road side unit is located. In some embodiments, when an on board unit is within a service range of the road side unit, the road side unit may perform data transmission with the on board unit. In some embodiments, the road side unit may set a service state of the on board unit.

An on board unit is a device installed on a vehicle to implement the V2X communication. For example, the on board unit may be an on-board navigation system, or may be other forms of on-board hardware or software devices. Contents and forms of the on board unit are not limited the embodiments of the present disclosure. On board units may be integrated to form a communication network, for example, the on board units may be integrated to form 4G/5G Uu communication chips and modules, LTE-V2X/5G NR-V2X communication chips and modules. The on board unit may use Uu interface and/or PC5 interface. In some examples, basic functions of the on board unit include service functions (e.g., a basic function of the on board unit may include at least one of the following service functions: data transmission and reception, protocol conversion, reading CAN (controller area network) bus data, positioning, and time synchronization, etc.), functions of the on board unit are not limited in the embodiments of the present disclosure.

The server is used to provide services to an on board unit, for example, the server may provide services related to the vehicle-to-everything. The server may be a server (for example, a vehicle-to-everything server), or may be a core network, or may be some nodes in the core network. In the present disclosure, a form of the server is not limited. In some embodiments, the server and the on board unit communicate with each other through the on board unit. For example, the server may send service information to the on board unit through the road side unit. As another example, the server may receive registration information of the on board unit through the road side unit, and the on board unit may be registered according to the registration information.

Referring to FIG. 1, there is an overlapped area between a service range of the first road side unit 101 and a service range of the second road side unit 102.

In some embodiments, the first road side unit 101 and the second road side unit 102 access to different types of communication networks. For example, the first road side unit 101 accesses a 5G network, and the second road side unit 102 accesses a PC5 network. As another example, the first road side unit 101 accesses the PC5 network, and the second road side unit 102 accesses the 5G network. It should be understood that with the development of communication technology, a road side unit may further access to other types of communication networks.

In some embodiments, the first road side unit 101 and the second road side unit 102 may be deployed independently or may be integrated. In some embodiments, the first road side unit 101 and the second road side unit 102 may also be a same road side unit. A connection between the first road side unit 101 and the second road side unit 102 is established through wired or wireless feedback.

In some embodiments, in a case where the first road side unit 101 and the second road side unit 102 access to different types of communication networks, the on board unit 103 may cross different communication networks when the on board unit 103 moves from the first road side unit to the second road side unit, or from the second road side unit to the first road side unit.

It should be noted that although only a single on board unit and two road side units are shown in FIG. 1, there may actually be more on board units or road side units. For example, an on board unit may gradually cross service ranges of three or more road side units located in different communication networks. As another example, a plurality of on board units may simultaneously or sequentially cross from a service range of a road side unit to a service range of a different road side unit of another communication network, which is not limited in the present disclosure.

It should be understood that the above-mentioned communication systems may also have other names (such as communication network, network system, network architecture, or communication architecture, etc.), and the above-mentioned communication systems may also include other possible network structures (such as core network elements, etc.), which are not limited in the embodiments of the present disclosure.

In addition, the above-mentioned communication systems are merely for more clearly illustrating the technical solutions of the present disclosure, and do not constitute a limitation on the present disclosure. Those of ordinary skill in the art should know that with the evolution of the network architecture and the emergence of new service scenarios, the technical solutions provided in the present disclosure are also applicable to similar technical problems.

In order to illustrate the technical solutions provided in the embodiments of the present disclosure more clearly, the vehicle-to-everything communication method provided in the embodiments of the present disclosure will be illustrated in detail below.

FIG. 2 shows a vehicle-to-everything communication method provided in the embodiments of the present disclosure, and in the following explanation, a first road side unit may be taken as an executing subject of the method. Referring to FIG. 2, the method includes S101 to S102.

In S101, a first on board unit is detected to move into a service range of a first road side unit is detected.

In some embodiments, the first road side unit is a road side unit in a first communication network. The first communication network may be a PC5 network or a 5G network. It should be understood that with the development of communication technology, the first communication network may also be other types of networks, which is not limited in the present disclosure.

In some embodiments, the first road side unit may detect whether the first on board unit moves into the service range of the first road side unit by determining whether information sent from the first on board unit is received. For example, if the information sent from the first on board unit is received, it is considered that a target on board unit moves into the service range of the first road side unit.

In some examples, the information sent from the first on board unit may be any information. For example, the information sent from the first on board unit includes, but not limited to any of the following: service access to request information, basic safety message (BSM), road side information (RSI)/road side safety message (RSM), traffic signal phase and timing message (SPAT), and map message, which is not limited in the present disclosure.

In some examples, the information sent from the first on board unit at least includes an identification of the first on board unit. In some examples, the information sent from the first on board unit further includes at least one of: an IP (Internet Protocol) address of the first on board unit, a port number of the first on board unit, and a service requirement of the first on board unit.

It should be noted that the above-mentioned detecting methods are merely examples. For example, the first road side unit may further combine manners such as camera shooting, radar ranging, etc., to detect whether the first on board unit moves into the service range of the first road side unit, and a manner for the first road side unit to detect that the first on board unit moves into the service range of the first road side unit is not limited in the present disclosure.

In some embodiments, the first road side unit may merely support one communication network. In some other embodiments, the first road side unit may simultaneously support multiple communication networks (e.g., the first road side unit may simultaneously support both the first communication network and the second communication network), which is not limited in the present disclosure.

In some embodiments, the first on board unit only supports to simultaneously access to one kind of communication network. For example, the first on board unit supports to simultaneously use one kind of communication interface.

In other embodiments, the first on board unit supports to simultaneously access to multiple kinds of communication networks. For example, the first on board unit supports to simultaneously use multiple kinds of communication interfaces.

In some embodiments, in a case where the first on board unit is detected to move into the service range of the first road side unit, a service state of the first on board unit is set to an active state.

For example, after receiving the information sent from the first on board unit, the first road side unit determines that the first on board unit moves into the first road side unit. The information includes information of an identification of the first on board unit. Furthermore, the first road side unit may store the identification of the first on board unit.

It should be understood that as the on board unit moves, the IP address of the first on board unit may change. However, since a service of the on board unit is associated with the identification of the on board unit, the connection between the first on board unit and the server remains unchanged regardless of how the IP address of the first on board unit changes. Therefore, there is no need to re-establish the connection between the first road side unit and the server, which can ensure the continuity of the service of the first on board unit to a certain extent.

In some embodiments, the first road side unit stores a service state of at least one on board unit. The service state includes an active state and an inactive state. Furthermore, the first road side unit may further add, delete, or modify service states of a plurality of on board units.

For example, in a case where the first communication network is a 5G network, the first road side unit may store, add, delete, or modify the service state of at least one on board unit. It should be understood that the 5G network mentioned here is only an example, which does not mean that the first road side unit does not have this function when it is a PC5 network. With the development of communication technology, the first road side unit may also have the above-mentioned processing function for the service states when the first road side unit belongs to other possible communication networks.

In some embodiments, a service state of each on board unit corresponds to an identification of the on board unit. For example, the service state of each on board unit corresponds to a unique identification of the on board unit. In some examples, the identification of the on board unit is a pseudocode value.

In some embodiments, in a case where the service state of the on board unit is an active state, it means that the first road side unit is providing services to the on board unit.

In some embodiments, in a case where the service state of the on board unit is an inactive state, it means that other road side units associated with the first road side unit are providing services to the on board unit.

As an example, other road side units associated with the first road side unit may be: a road side unit adjacent to the first road side unit, or a road side unit belonging to a same predetermined road side unit group as the first road side unit. It should be understood that contents of an association relationship is not limited in the present disclosure.

As another example, a communication network accessed by a road side unit associated with the first road side unit is different from a communication network accessed by the first road side unit.

In some embodiments, after determining that the first road side unit moves into the service range of the first road side unit, the first road side unit may further set the service state of the first on board unit to an active state.

For example, in a case where the service state of the first on board unit is not stored in the first road side unit, the service state of the first on board unit is added, and the service state is set to an active state.

As another example, in a case where the service state of the first on board unit is stored in the first road side unit, the service state of the first on board unit is switched from an inactive state to an active state.

Furthermore, in a case where the service state of the first on board unit is an active state, information related to the first on board unit may be sent to other road side units associated with the first road side unit, so as to enable the other road side units to prepare for the first on board unit switching the communication network in advance, or to enable the other road side units to assist the first on board unit to perform communication with on board units served by the other road side units.

In some embodiments, in a case where the service state of the first on board unit is in an active state, and information sent from the first on board unit is not received within a first preset duration, the service state of the first on board unit is switched from an active state to an inactive state.

The first preset time may also have other names (for example, the first preset time may also referred to as activation waiting time or active-time, etc.), which is not limited in the present disclosure.

It should be understood that in a case where the first on board unit is in inactive state, although the first road side unit may no longer be a road side unit providing services to the first on board unit, relevant information of the first on board unit may still be retained in the first road side unit, in order to ensure that the first road side unit is still prepared in advance when the first on board unit accesses back to the first road side unit, and to ensure the service continuity of the first on board unit when crossing different communication networks or road side units.

In some embodiments, if the service state of the first on board unit is an inactive state, and information sent from the first on board unit is not received within a second preset duration, information used to record a service state of the first on board unit is deleted.

The second preset time may also have other names (for example, may also be referred to as standby waiting time, inactive waiting time, or standby-time, etc.) which is not limited in the present disclosure.

In some embodiments, in a case where the first on board unit moves into a service range of a second road side unit in a second communication network, and switches to the second communication network, the service state of the first on board unit may further be set to an inactive state. The second communication network is different from the first communication network.

For example, in a case where the service state of the first on board unit is in an active state, second information sent from the second road side unit is received, the second information is used to indicate the first road side unit to switch the service state of the first on board unit from an active state to an inactive state; and the service state of the first on board unit is switched from the active state to the inactive state in response to the second information.

In S102, in response to detecting that the first on board unit moves into the service range of the first road side unit, the first road side unit sends first information to the first on board unit.

Correspondingly, the first on board unit receives the first information sent from the first road side unit.

In some embodiments, there is a vehicle-to-everything services provided by the second road side unit in the second communication network within the service range of the first road side unit, and there is an overlapped area between the service range of the first road side unit and the service range of the second road side unit in the second communication network.

For example, the service range of the first road side unit partially overlaps with the service range of the second road side unit; or the service range of the first road side unit completely overlaps with the service range of the second road side unit; or the service range of the first road side unit may be the same as the service range of the second road side unit.

In some embodiments, deployment of the first road side unit and the second road side unit may refer to the description of the communication system in FIG. 1, which will not be repeated herein.

In some embodiments, the first communication network is different from the second communication network. For example, the first communication network is a PC5 network, and the second communication network is a 5G network. As another example, the first communication network is a 5G network, and the second communication network is a PC5 network. It should be understood that with the development of communication technology, the first communication network and the second communication network may also be other types of communication networks, which is not limited in the present disclosure.

In some embodiments, the first information is used to indicate that there is a vehicle-to-everything service provided by the second road side unit.

In some embodiments, in a case where the first communication network is a PC5 network and the second communication network is a 5G network, the first information includes an service IP address and a port number of the second road side unit.

In some embodiments, the service IP address and the port number of the second road side unit are sent in advance from the second road side unit to the first road side unit; or the service IP address and the port number of the second road side unit are sent in response to an indication for requesting the IP address and port number from the first road side unit; or service IP address and the port number of the second road side unit are sent after receiving information related to the first on board unit sent from the first road side unit.

In this way, in a case where switching to a 5G network is needed, the first on board unit may be enabled to access to the second road side unit and establish a session connection (such as a TCP or UDP connection) according to the service IP address and the port number of the second road side unit.

In some embodiments, in a case where the first communication network is a 5G network and the second communication network is a PC5 network, the first information includes an access configuration of the PC5 interface of the second road side unit.

In some embodiments, the access configuration of the PC5 interface of the second road side unit is sent in advance from the second road side unit to the first road side unit; or the access configuration of the PC5 interface of the second road side unit is sent in response to an indication for requesting the IP address and the port number from the first road side unit; or the access configuration of the PC5 interface of the second road side unit is sent after receiving the information related to the first on board unit sent from the first road side unit.

In this way, in a case where switching to a PC5 network is needed, the first on board unit may be enabled to access to the second road side unit and establish a session connection (such as a TCP or UDP connection) according to the access configuration of the PC5 interface of the second road side unit.

In some embodiments, the first information includes information related to at least one on board unit served by the second road side unit.

In some examples, the information related to an on board unit includes an identification and/or service data of the on board unit.

In some examples, there is an association relationship between the identification of the on board unit and the service data of the on board unit, or the service data of the on board unit corresponds to a unique identification; or the service data of the on board unit may be bound to the identification of the on board unit.

In some examples, the information related to the on board unit further includes at least one of: an IP address of the on board unit, a port number of the on board unit, and a service requirement of the on board unit.

In some examples, there is a corresponding relationship between the service requirement of the on board unit and the port number of the on board unit. For example, the service requirement of the on board unit corresponds to a unique port number of the on board unit. As another, in a case where the service requirement of the on board unit are bound to the port number of the on board unit, and forwarded information includes the service requirement of the on board unit, the second road side unit may determine the port number of the on board unit according to the service requirement and corresponding relationship.

Through the vehicle-to-everything communication method provided in the embodiments of the present disclosure, the first road side unit in the first communication network may be enabled to notify the on board unit in advance that there is a vehicle-to-everything service provided by the second road side unit in the second communication network in a case where the first road side unit detects that the on board unit (such as the first on board unit) moves into the service range of the first road side unit, thereby making the on board unit prepare for network switching, and improving the service continuity of the on board unit when crossing different types of communication networks.

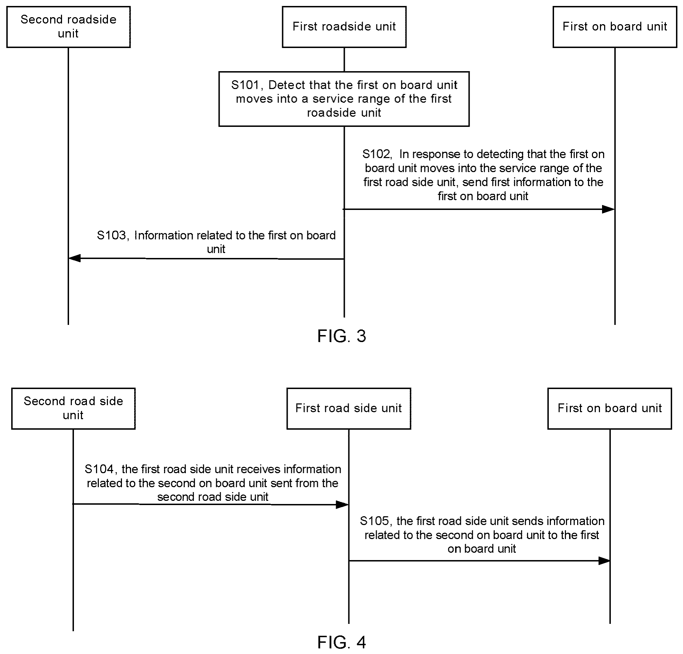

In some embodiments, as shown in FIG. 3, the above method further includes S103.

In S103, the first road side unit sends information related to the first on board unit to the second road side unit.

The information related to the first on board unit includes the identification of the first on board unit and/or the service data of the first on board unit.

In some embodiments, the first road side unit sends information related to the first on board unit to the second road side unit in a case where the following conditions 1-1 to 1-3 are met:
Condition 1-1: A preset cycle starting point is reached.
   For example, in a case where the preset cycle starting point is reached, the first road side unit sends the information related to the first on board unit to the second road side unit.
Condition 1-2: The first road side unit detects that the first on board unit moves into the service range of the first road side unit.
Condition 1-3: The service state of the first on board unit in the first road side unit is an active state.

Based on this, the second road side unit may be enabled to timely acknowledge information about a on board unit (such as the first on board unit) that may pass through the service range of the second road side unit, and prepare in advance for the on board unit to cross different communication networks.

It should be noted that S102 may be performed before S103, or may also be performed after S103, or may be performed simultaneously with 103, which is not limited in the present disclosure.

It can be seen that the above embodiments mainly illustrate a situation where the on board unit (such as the first on board unit) moves into the service range of first road side unit, or crosses from the service range of first road side unit to a service range of another road side unit (such as the second road side unit) that is located in a different communication network. In order to illustrate solutions more clearly and completely, the following may take the example of an on board unit (such as a second on board unit) moving into a service range of another road side unit (such as a second road side unit) that is located in a different communication network from the first road side unit, or moving from a service range of another road side unit to the service range of the first road side unit. As shown in FIG. 4, in some embodiments, the above method further includes S104.

In S104, the first road side unit receives information related to the second on board unit sent from the second road side unit.

The second on board unit is an on board unit that moves into the service range of the second road side unit.

In some embodiments, the second on board unit only supports to simultaneously access to one kind of communication network.

In other embodiments, the second on board unit supports to simultaneously access to multiple kinds of communication networks.

In some embodiments, the information related to the second on board unit includes an identification of the second on board unit and/or service data of the second on board unit.

In some examples, the information related to the second on board unit is determined by the second road side unit according to the service information sent from the second on board unit. In one example, the information (such as service data) related to the second on board unit is carried by BSM information sent from the second on board unit.

In some embodiments, the information related to the second on board unit further includes at least one of: an IP address of the second on board unit, a port number of the second on board unit, and a service requirement of the second on board unit.

It should be noted that the information related to the second on board unit may also refer to the description of "information related to the on board unit" in 102 above, which will not be repeated herein.

In some embodiments, in response to receiving the information related to the second on board unit, the first road side unit sets the service state of the second on board unit to an inactive state.

It should be understood that if the first road side unit receives the information related to the second on board unit sent from the second road side unit, it means that the second on board unit moves into the service range of the second road side unit and is served by the second road side unit. Therefore, the service state of the first on board unit in the first road side unit is set to the inactive state.

In some embodiments, in response to receiving the information sent from the second on board unit for a first time, the first road side unit switches the service state of the second on board unit from an inactive state to an active state.

It should be understood that in a case of receiving the information sent from the second on board unit for the first time, it means that the second on board unit moves into the service range of the first road side unit, and may be served by the first road side unit. In addition, since the first road side unit pre-stores the identification of the second on board unit, and the identification of the second on board unit is related to a service, there is no need to re-register the second on board unit on the server, which may ensure the continuity of the service when the second on board unit crosses different communication networks.

In some embodiments, in response to receiving the information sent from the second on board unit for the first time, the first road side unit sends third information to the second road side unit, and the third information is used to indicate the second road side unit to switch the service state of the second on board unit from the active state to the inactive state.

In the solutions provided in the embodiments of the present disclosure, the first road side unit in the first communication network may acknowledge the information about the on board unit (such as the second road side unit) served by the second road side unit in the second communication network in advance, thus the preparation may be performed before the on board unit switches from the second communication network to the first communication network, to ensure the service continuity when the on board unit crosses different types of communication networks.

In some embodiments, as shown in FIG. 4, the above method also includes S105.

In S105, the first road side unit sends information related to the second on board unit to the first on board unit.

In some embodiments, the information related to the second on board unit is carried by the first information.

In some embodiments, the information related to the second on board unit may refer to the description in S104, which will not be repeated herein.

In some embodiments, the first road side unit sends the information related to the second on board unit to the first on board unit in a case where the following conditions 2-1 to 2-3 are met.

Condition 2-1: the information related to the second on board unit sent from the second road side unit is received.

Condition 2-2: an indication sent from the first on board unit for indicating to acquire information related to other on board units is received.

Condition 2-3: relevant information about the second on board unit sent from the second road side unit is received, and the service state of the second on board unit in the first road side unit is an inactive state.

Based on this, communication between on board units in different communication networks may be implemented, for example, the first on board unit in the first communication network is enabled to acquire the information related to an on board unit in the second communication network (such as at least one on board unit served by the second road side unit).

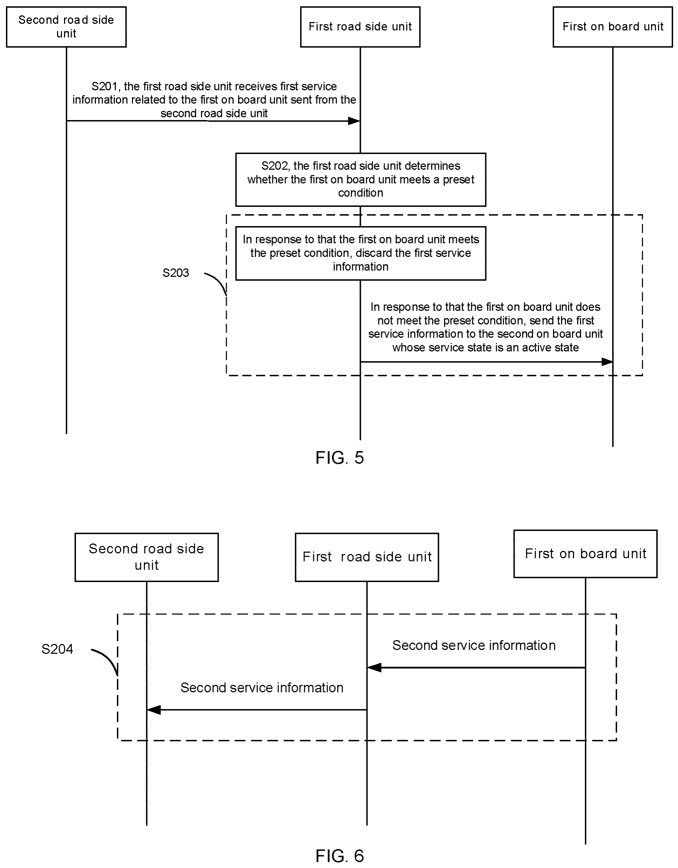

Considering that in a case where the on board unit supports multiple kinds of communication networks simultaneously, the on board unit may receive the same information from both the first road side unit and second road side unit simultaneously, and the first road side unit may also receive the same information from both the on board unit and the second road side unit simultaneously. To avoid receiving redundant data, a vehicle-to-everything communication method is further provided in the embodiments of the present disclosure, as shown in FIG. 5, the method includes S201 to S203.

In S201, the first road side unit receives first service information related to the first on board unit sent from the second road side unit.

The deployment relationship between the first road side unit and the second road side unit may refer to the description above, and will not be repeated herein.

In some embodiments, first service information at least includes the identification of the first on board unit.

In some other embodiments, the first service information further includes service data of the first on board unit.

In some embodiments, the first service information further includes at least one of: an IP address of the first on board unit, a port number of the first on board unit, and a service requirement of the first on board unit.

In some embodiments, the on board unit (such as the first on board unit) supports to perform communication by using both the first communication interface and the second communication interface simultaneously; the first communication interface is an interface used for communication with the first road side unit, and the second communication interface is an interface used for communication with the second road side unit.

It should be understood that in a case where the on board unit supports to perform communication by using both the first communication interface and the second communication interface simultaneously, the on board unit may send the first service information through the first communication interface and send the first service information through the second communication interface. That is, both the first road side unit and the second road side unit may receive the first service information sent from the on board unit.

In S202, the first road side unit determines whether the first on board unit meets a preset condition.

In some embodiments, the preset condition includes a service state of the first on board unit being an active state.

It should be understood that when the service state of the first on board unit is an active state, the first road side unit is providing services to the first on board unit.

In some embodiments, the preset condition further includes the first on board unit having a capability for performing communication by using both a first communication interface and a second communication interface simultaneously.

It should be understood that in a case where the first on board unit supports to perform communication by using both the first communication interface and the second communication interface simultaneously, the first on board unit is capable of simultaneously sending service information to both the first road side unit and the second road side unit.

In some embodiments, the first road side unit may further receive capability information of the first on board unit. It should be understood that the capability information of the on board unit (such as the first on board unit) is used to indicate whether the on board unit has the capability for performing communication by using both a first communication interface and a second communication interface simultaneously.

It should be understood that in a case of receiving the capability information of the first on board unit, the first road side unit determines that the first on board unit meets the preset condition.

In S203, in response to that the first on board unit meets the preset condition, the first service information is discarded, or in response to that the first on board unit does not meet the preset condition, the first service information is sent to the second on board unit whose service state is an active state.

Referring to the description in S202, it can be seen that when the first on board unit meets the preset condition, the first road side unit may directly receive the first service information sent from the first on board unit itself. Therefore, there is no need to process the first service information forwarded by the second road side unit. In this way, de-looping processing may be performed to avoid receiving redundant data, implement data filtering, and prevent signaling storms.

Similarly, when the first on board unit does not meet the preset condition, it means that the first road side unit has not communicated with the first on board unit, that is, the first road side unit has not received the first service information. Therefore, the first service information is processed, and the first service information is sent to the second on board unit served by the first road side unit, thereby achieving communication between the first on board unit and second on board unit crossing different communication networks.

In some embodiments, as shown in FIG. 6, the above method further includes 204.

In S204, the first road side unit receives second service information sent from the first on board unit, and forwards the second service information to the second road side unit.

Correspondingly, the second road side unit may refer to the method described in S201 to S203 to process the second service information.

In this way, data filtering may be implemented on a side of the road side unit without the need for data filtering on a side of the on board unit, thus to prevent signaling storms.

It should be noted that although data filtering for the road side unit and the on board unit may be implemented through S202 to S204, the S202 to S204 are not mandatory steps. For example, after the first road side unit receives the service information related to the on board unit sent from the second road side unit, the first road side unit may further forward it directly to another on board unit whose service state is an active state without filtering or judgment. Correspondingly, the another on board unit, upon receiving the service information, independently determines whether the service information is needed to be processed.

For example, the above method may further include: the on board unit receiving the second service information through at least one of the first communication interface and the second communication interface; detecting whether the second service information is service information previously sent from the on board unit itself; in response to that the second service information is the service information previously sent from the on board unit itself, discarding the second service information.

Based on this, data filtering may be implemented on the side of the on board unit to avoid redundant data reception, and prevent signaling storms.

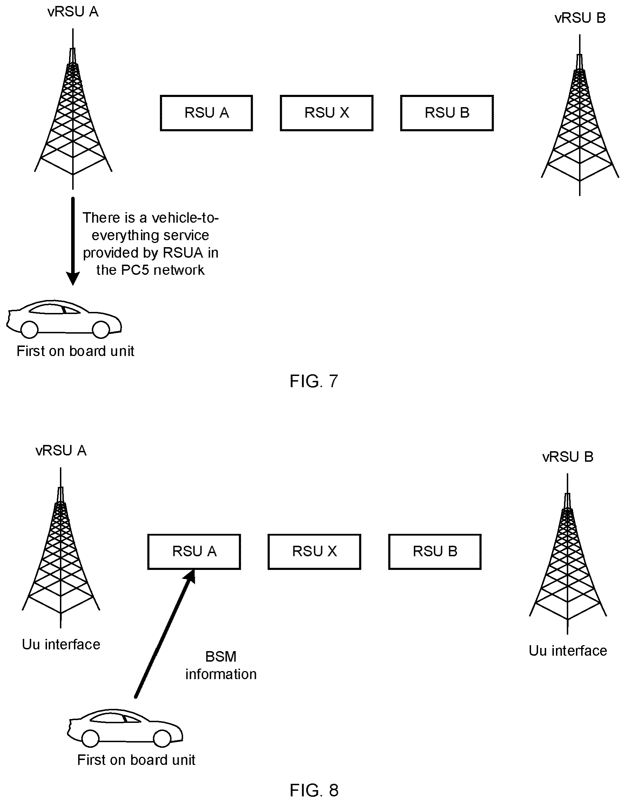

In order to illustrate the solution more clearly, the following is taking vehicle-to-everything communication scenarios shown in FIGs. 7 to 12 as examples to perform exemplary illustration.

As shown in FIG. 7, in this scenario, there are road side units: vRSUA, RSUA, RSUX, RSUB, vRSUB, and the first on board unit.

The VRSUA and the vRSUB are road side units in 5G networks, and use the Uu interface.

The RSUA, the RSUX, and the RSUB are road side units in the PC5 network, and use the PC5 interface.

There are an overlapped area between a service range of the vRSUA and a service range of the RSUA, and an overlapped area between a service range of the vRSUB and a service range of the RSUB; and a connection between the vRSUA and the RSUA is established through wireless or wired feedback, while a connection between the vRSUB and the RSUB is established through wireless or wired feedback.

The vRSUA performs V2X communications with the first on board unit based on the Uu interface, and sets the service state of the first on board unit to an active state.

The vRSUA sends information for indicating that there is a vehicle-to-everything service provided by the RSUA in the PC5 network to the first on board unit. In some examples, the information further includes an access configuration of the PC5 interface of the RSUA.

The vRSUA further sends information related to the first on board unit to the RSUA, and the information at least includes an identification of an on board unit. In some examples, the information further includes BSM information of the on board unit, etc.

Correspondingly, the RSUA receives the information related to the first on board in order to prepare in advance for the on board unit switching or crossing different communication networks.

Furthermore, the RSUA may further broadcast the information related to the first on board to other on board units in the PC5 network to implement vehicle-to-vehicle communication across different communication networks.

Similarly, the RSUA may further send information related to multiple on board units served by the RSUA itself to the vRSUA. Correspondingly, the vRSUA receives the information related to the multiple on board units. Furthermore, the vRSUA may further send the information related to the multiple on board units to the first on board unit to implement the vehicle-to-vehicle communication across different communication networks.

As shown in FIG. 8, in a case where the first on board unit learns the existence of the PC5 network and decides to switch to the PC5 network, i.e., access to the RSUA, the first on board unit sends BSM information to the RSUA through the PC5 interface, and the BSM information includes the identification of the first on board unit.

Correspondingly, after the RSUA receives the BSM information, the RSUA indicates the vRSUA to switch the service state of the first on board unit to an inactive state through a manner of wired feedback or wireless feedback. Alternatively, if the vRSUA does not receive a message sent from the first on board unit within the first preset time, the service state of the first on board unit may be switched to the inactive state.

Furthermore, in a case where the service state of the first on board unit is the inactive, and a message sent from the first on board unit is not received within the second preset time, the vRSUA deletes the information used to record the service state of the first on board unit.

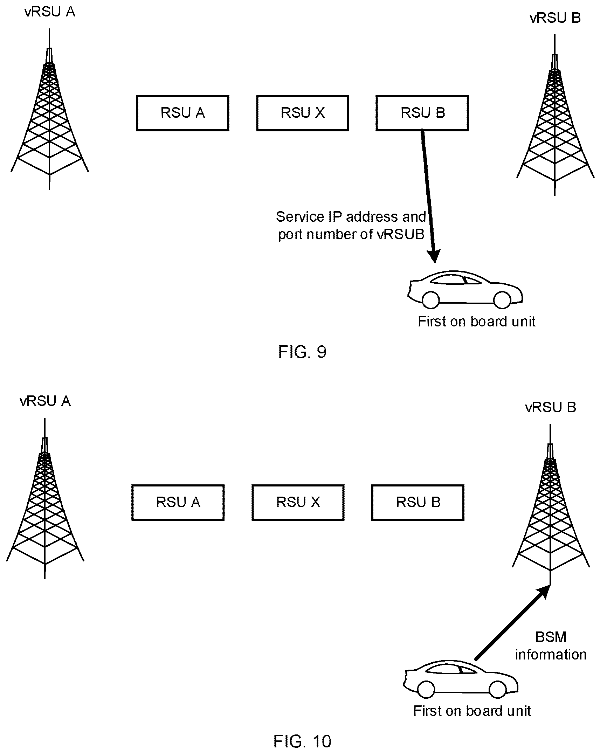

As shown in FIG. 9, the first on board unit sequentially receives V2X messages broadcasted by RSUA, RSUX, and RSUB during the motion process. In a case where the first on board unit moves into the service range of the RSUB, the RSUB sends information for indicating that there is a vehicle-to-everything service provided by the vRSUB in the 5G network to the first on board unit. In some examples, the information further includes a service IP address and a port number of the vRSUB.

In some examples, the RSUB may further send information related to the first on board unit to the vRSUB through the manner of wired feedback or wireless feedback.

Furthermore, after the vRSUB receives the information related to the first on board unit, the vRSUB sets the service state of the first on board unit to an inactive state; or the RSUB may notify the vRSUB to set the service state of the first on board unit to the inactive state.

In some examples, the RSUB receives information related to at least one on board unit served by the vRSUB itself. Furthermore, the RSUB may send or broadcast information related to at least one on board unit to the first on board unit.

As shown FIG. 10, in a case where the first on board unit learns the existence of the 5G network, and decides to switch to the 5G network, i.e., access to the vRSUB, the first on board unit sends BSM information to the vRSUB through the Uu interface, and establishes a session connection. The BSM information includes the identification of the first on board unit.

Furthermore, after the connection is established, the vRSUB sets the service state of the first on board unit to an active state, and sends V2X information to the first on board unit through the Uu interface.

In some examples, if the vRSUB does not receive a message sent from the first on board unit within the second preset time, the vRSUB deletes the information used to record the service state of the first on board unit.

In some examples, the first on board unit switches to vRSUB in the 5G network when the first on board unit learns the existence of the 5G network and cannot monitor a message from the PC5 network.

Based on the examples shown in FIGs. 7 to 10, the continuity of services when the first on board unit crosses different communication networks can be ensured, and the vehicle-to-vehicle communication between the first on board unit and other on board units in other communication networks can be implemented.

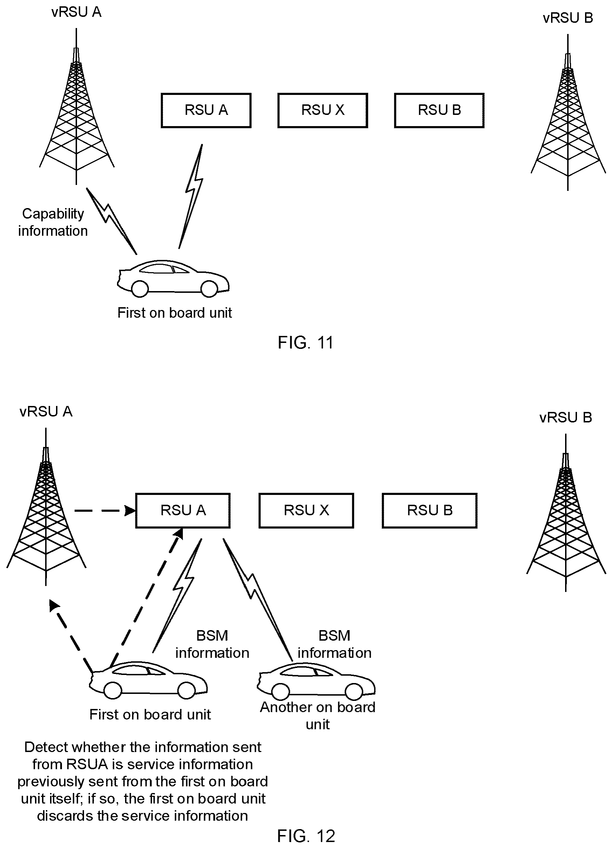

FIG. 11 shows another scenario of the vehicle-to-everything communication, which is used to implement data filtering and avoid receiving redundant data.

As shown in FIG. 11, in this scenario, there are road side units: vRSUA, RSUA, RSUX, RSUB, vRSUB, and the first on board unit.

The vRSUA, the RSUA, the RSUX, the RSUB, the vRSUB, and the first on board unit may refer to the descriptions in FIGs. 7 to 10, which will not be repeated herein.

The first on board unit supports to use the PC5 interface and the Uu interface simultaneously to send information. For example, using the PC5 interface to send information to RSUA is supported, while using Uu interface to send information to vRSUA is also supported. For example, the first on board unit may simultaneously send information to both RSUA and vRSUA. For example, the BSM information of the first on board unit is sent. As another example, capability information for indicating whether the first on board unit supports to use the PC5 interface and the Uu interface simultaneously is sent.

In some examples, the first on board unit sends information to RSUA and/or vRSUA.

In some examples, after the RSUA receives information sent from the first on board unit, the RSUA forwards the information to the vRSUA. It should be understood that at this time, the RSUA is providing services to the first on board unit, and RSUA is not aware of whether the first on board unit supports to use the PC5 interface and the Uu interface simultaneously. Therefore, the RSUA forwards the information sent from the first on board unit to vRSUA, so that when the first on board unit switches to vRSUA in the 5G network, vRSUA may be prepared in advance.

In some examples, after the vRSUA receives the information sent from the first on board unit from the RSUA, the vRSUA discards the information in a case where a preset condition is met; and in a case where the preset condition is not met, the information is sent to multiple on board units served by the vRSUA, that is, the multiple on board units in the vRSUA whose service state are active states.

The preset condition includes: the active state of the first on board unit being an active state; or capability information sent from the first on board unit being received, and the capability information supporting the first on board unit to support to use of the PC5 interface and the Uu interface simultaneously.

It should be noted that the switching of communication networks between vRSUA and RSUA may refer to the description in vRSUA and RSUA, which will not be repeated herein.

It should be understood that in the embodiments shown in FIG. 11, data filtering may be implemented on the side of the road side unit without the need for data filtering on the side of the on board unit, thus to prevent signaling storms.

FIG. 12 shows yet another scenario of the vehicle-to-everything communication, which is used to implement data filtering and avoid receiving redundant data.

As shown in FIG. 12, in this scenario, there are road side units: vRSUA, RSUA, RSUX, RSUB, vRSUB, and the first on board unit.

The vRSUA, the RSUA, the RSUX, the RSUB, the vRSUB, and the first on board unit may refer to the descriptions in FIGs. 7 to 10, which will not be repeated herein.

The first on board unit supports to use the PC5 interface and the Uu interface simultaneously to send information. For example, using the PC5 interface to send information to RSUA is supported, while using Uu interface to send information to vRSUA is also supported. For example, the first on board unit may simultaneously send information to both RSUA and vRSUA. For example, the BSM information of the first on board unit is sent.

In some examples, the first on board unit sends information to RSUA and/or vRSUA.

In some examples, after the RSUA receives information sent from the first on board unit, the RSUA forwards the information to the vRSUA. Thus, the first on board unit switches to vRSUA in the 5G network, vRSUA may be prepared in advance.

In some examples, after the vRSUA receives the information sent from the first on board unit from the RSUA, the vRSUA discards the information in a case where the service state of the first on board unit is an active state; and in a case where the service state of the first on board unit is an inactive state or the service state of the first on board unit cannot be queried, sends the information to multiple on board units served by the vRSUA, that is, multiple on board units in vRSUA whose service states are active states.

In some examples, after the vRSUA receives the information directly sent from the first on board unit, the vRSUA sends the information to RSUA.

Correspondingly, after the RSUA receives the information, RSUA sends the information to at least one on board unit served by the RSUA itself.

After the first on board unit receives the information sent from the RSUA, the first on board unit detects whether the information sent from RSUA is service information previously sent from the first on board unit itself; if so, the first on board unit discards the service information.

Based on this, data filtering may be implemented on the side of the on board unit to avoid redundant data reception, and prevent signaling storms.

The solutions provided in the embodiments of the present disclosure are introduced above from the perspective of methods. A communication apparatus is further shown below, which is configured to perform the vehicle-to-everything communication method in any of the above-mentioned embodiments and possible implementations thereof. It can be understood that, in order to implement the above functions, the communication apparatus includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that, the division for the modules in the embodiments of the present disclosure is illustrated, which is only a logical functional division, and there may be other division manners in actual implementation. It should be understood that the above-mentioned module may also referred to as a unit. The following is illustrated by taking an example of a division of each functional module corresponding to each function.

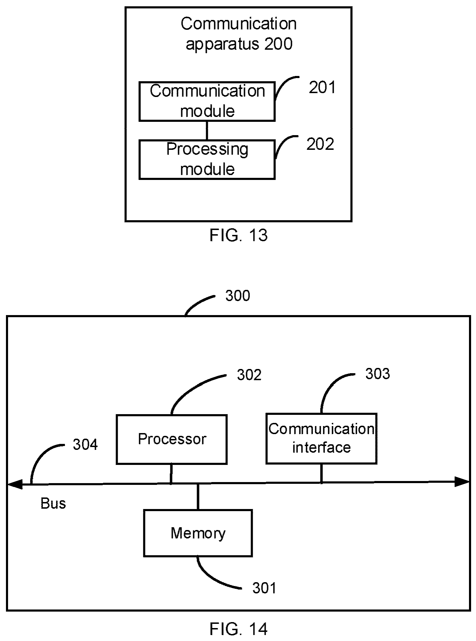

FIG. 13 is a structural schematic diagram of a communication apparatus according to some embodiments. Referring to FIG. 13, the communication apparatus 200 includes: a communication module 201 and a processing module 202.

The processing module 202 is configured to detect that a first on board unit moves into a service range of a first road side unit in a first communication network.

The communication module 201 is configured to send first information to the first on board unit in response to detecting that the first on board unit moves into a service range of a first road side unit, where the first information is used to indicate that there is a vehicle-to-everything service provided by a second road side unit; there is an overlapped area between the service range of the first road side unit and a service range of the second road side unit in a second communication network.

In some embodiments, the first communication network is a PC5 network, the second communication network is a 5G network, and the first information includes an service IP address and a port number of the second road side unit; or the first communication network is a 5G network, the second communication network is a PC5 network, and the first information includes an access configuration of a PC5 interface of the second road side unit.

In some embodiments, the communication module 201 is further configured to send information related to the first on board unit to the second road side unit, where the information related to the first on board unit includes an identification of the first on board unit and/or service data of the first on board unit.

In some embodiments, the processing module 202 is further configured to receive second information sent from the second road side unit in response to that a service state of the first on board unit is an active state, where the second information is used to indicate the first road side unit to switch the service state of the first on board unit from an active state to an inactive state; and switch the service state of the first on board unit from the active state to the inactive state in response to the second information.

In some embodiments, the processing module 202 is further configured to switch the service state of the first on board unit from the active state to an inactive state in response to that a service state of the first on board unit is an active state, and information sent from the first on board unit is not received within a first preset duration.

In some embodiments, the processing module 202 is further configured to delete information used to record the service state of the first on board unit in response to that the service state of the first on board unit is the inactive state, and the information sent from the first on board unit is not received within a second preset duration.

In some embodiments, the communication module 201 is further configured to receive information related to the second on board unit sent from the second road side unit; where the second on board unit is an on board unit that moves into the service range of the second road side unit, the information related to the second on board unit includes an identification of the second on board unit and/or service data of the second on board unit.

In some embodiments, the processing module 202 is further configured to set a service state of the second on board unit to an inactive state in response to receiving the information related to the second on board unit.

In some embodiments, the processing module 202 is further configured to switch a service state of the second on board unit from an inactive state to an active state in response to receiving information sent from the second on board unit for a first time.

In some embodiments, the processing module 202 is further configured to send third information to the second road side unit in response to receiving information sent from the second on board unit for the first time, where the third information is used to indicate the second road side unit to switch a service state of the second on board unit from an active state to an inactive state.

In some embodiments, the communication module 201 is further configured to send information related to the second on board unit to the first on board unit.

Another communication apparatus is further provided in the embodiments of the present disclosure, which is shown in FIG. 13. The communication apparatus 200 includes: the communication module 201 and the processing module 202.

The communication module 201 is configured to receive first information sent from a first road side unit after an on board unit moves into a service range of the first road side unit in a first communication network, where the first information is used to indicate that there is a vehicle-to-everything service provided by a second road side unit in a second communication network, and there is an overlapped area between the service range of the first road side unit and a service range of the second road side unit.

The processing module 202 is configured to choose at least one of the first road side unit and the second road side unit to perform communication based on the first information.

In some embodiments, the first communication network is a PC5 network, the second communication network is a 5G network, and the first information includes an service IP address and a port number of the second road side unit; or the first communication network is a 5G network, the second communication network is a PC5 network, and the first information includes an access configuration of a PC5 interface of the second road side unit.

In some embodiments, the communication module 201 is further configured to send service information to the second road side unit in response to choosing the second road side unit to perform communication, where the service information includes an identification of the on board unit.

Yet another communication apparatus is further provided in the embodiments of the present disclosure, which is shown in FIG. 13. The communication apparatus 200 includes: the communication module 201 and the processing module 202.

The communication module 201 is configured to receive first service information related to a first on board unit sent from a second road side unit in a second communication network, where there is an overlapped area between a service range of the first road side unit and a service range of the second road side unit, and the first road side unit access to the first communication network.

The processing module 202 is configured to determine whether the first on board unit meets a preset condition, where the preset condition includes a service state of the first on board unit being an active state; discard the first service information in response to that the first on board unit meets the preset condition; or send the first service information to the second on board unit whose service state is an active state in response to that the first on board unit does not meet the preset condition.

In some embodiments, the communication apparatus is a software or hardware device on the first road side unit, or is the first road side unit itself.

In some embodiments, the preset condition further includes the first on board unit having a capability for performing communication by using both a first communication interface and a second communication interface simultaneously; where the first communication interface is an interface used for communication with the first road side unit, and the second communication interface is an interface used for communication with the second road side unit.

In some embodiments, the communication module 201 is further configured to receive capability information of the first on board unit, where the capability information is used to indicate whether the first on board unit has the capability for performing communication by using both the first communication interface and the second communication interface simultaneously.

In some embodiments, the communication module 201 is further configured to receive second service information sent from the first on board unit; forward the second service information to the second road side unit.

Yet another communication apparatus is further provided in the embodiments of the present disclosure, which is shown in FIG. 13. The communication apparatus 200 includes: the communication module 201. In some embodiments, the communication apparatus 200 further includes a processing module 202.

In some embodiments, the communication module 201 is configured to send first service information through a first communication interface; send the first service information through a second communication interface; the first communication interface is an interface used for communication with a first road side unit in a first communication network, and the second communication interface is an interface used for communication with a second road side unit in a second communication network; there is an overlapped area between a service range of the first road side unit and a service range of the second road side unit.

In some embodiments, the communication module 201 is further configured to send capability information through at least one of the first communication interface and the second communication interface, the capability information is used to indicate whether the on board unit has a capability for performing communication by using both the first communication interface and the second communication interface simultaneously.

In some embodiments, the communication module 201 is also used to receive second service information through at least one of the first communication interface and the second communication interface. The processing module 202 is configured to detect whether the second service information is service information previously sent from the on board unit itself; and discard the second service information in response to that the second service information is the service information previously sent from the on board unit itself.

In a case where the functions of the above-mentioned integrated modules are implemented in the form of hardware, a possible structure of a communication apparatus is further provided in the embodiments of the present disclosure, and the communication apparatus is configured to perform the vehicle-to-everything communication method provided in the embodiments of the present disclosure. As shown in FIG. 14, the communication apparatus 300 includes a processor 302. In some examples, the communication apparatus may further include at least one of a communication interface 303, a bus 304, and a memory 301.

The processor 302 may be any of various exemplary logical blocks, modules and circuits described for implementing or executing the embodiments of the present disclosure. The processor 302 may be a central processor, a general-purpose processor, a digital signal processor, an application specific integrated circuit, a field programmable gate array, or other programmable logic component, a transistor logic component, a hardware assembly, or any combination thereof. The processor 302 may implement or execute various illustrative logical blocks, modules and circuits described in conjunction with the embodiments of the present disclosure. The processor 302 may also be a combination that implements computing functions, for example, the processor 302 includes a combination of one or more microprocessors, a combination of a DSP (digital signal processor) and a microprocessor, or the like.

The communication interface 303 is used to connect to other devices through a communication network. The communication network may be the Ethernet, a radio access to network, a wireless local area network (wireless local area network, WLAN), or the like.

The memory 301 may be a read-only memory (ROM) or other types of static storage devices that are capable of storing static information and instructions, a random access to memory (RAM) or other types of dynamic storage devices that are capable of storing information and instructions, or an electrically erasable programmable read-only memory (EEPROM), a magnetic disk storage medium or any other magnetic disk storage devices, or any other medium that can be used to carry or store desired program codes with instructions or data and can be accessed by a computer, which is not limited thereto.

As another possible implementation, the memory 301 may be integrated with the processor 302.

As another implementation, the memory 301 may exist independently from the processor 302, and the memory 301 may be connected to the processor 302 through the bus 304, and is configured to store instructions or program codes (e.g., computer program instructions, etc.) that are executable for the processor 302. When the processor 302 invokes and executes the instructions or program codes stored in the memory 301, the processor 302 may implement the vehicle-to-everything communication method provided in the embodiments of the present disclosure.

The bus 304 may be an extended industry standard architecture (EISA) bus, or the like. The bus 304 may be classified as an address bus, a data bus, a control bus, or the like. For ease of representation, only one bold line is used in FIG. 14 for representing the bus 304, but it does not mean that there is only one bus or one type of bus.

A computer-readable storage medium (e.g., a non-transitory computer-readable storage medium) is provided in some embodiments of the present disclosure, the computer-readable storage medium has stored computer program instructions, and the computer program instructions, upon being executed on a computer (e.g., the above-mentioned communication apparatus, the communication apparatus, base station, the first terminal, the second terminal and the processors thereof), enable the computer to perform the vehicle-to-everything communication method as described in any one of the above-mentioned embodiments. It should be understood that, the present disclosure imposes no limitation on a detailed form of the computer.

In some examples, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage medium described in the present disclosure may represent one or more devices for storing information and/or other machine-readable storage medium for storing information. The term "machine-readable storage medium" may include, but not limited to, a wireless channel and various other medium capable of storing, containing, and/or carrying instructions and/or data.

A computer program product including instructions is provided in the embodiments of the present disclosure, upon the computer program product is running on a computer, the computer is enabled to perform the vehicle-to-everything communication method as described in any one of the above-mentioned embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A vehicle-to-everything communication method, **characterized in that** the method is applied to a first road side unit in a first communication network, and there is an overlapped area between a service range of the first road side unit and a service range of a second road side unit in a second communication network, the method comprises:
detecting that a first on board unit moves into the service range of the first road side unit;
in response to detecting that the first on board unit moves into the service range of the first road side unit, sending first information to the first on board unit, wherein the first information is used to indicate that there is a vehicle-to-everything service provided by the second road side unit.

2. The method according to claim 1, wherein
the first communication network is a PC5 network, and the second communication network is a 5G network, the first information includes an service IP address and a port number of the second road side unit; or
the first communication network is a 5G network, the second communication network is a PC5 network, and the first information includes an access configuration of a PC5 interface of the second road side unit.

3. The method according to claim 1, further comprising:
the first road side unit sends information related to the first on board unit to the second road side unit, and the information related to the first on board unit includes an identification of the first on board unit and/or service data of the first on board unit.

4. The method according to claim 1, further comprising:
in response to that a service state of the first on board unit is an active state, receiving second information sent from the second road side unit, wherein the second information is used to indicate the first road side unit to switch the service state of the first on board unit from an active state to an inactive state;
in response to the second information, switching the service state of the first on board unit from the active state to the inactive state.

5. The method according to claim 1, further comprising:
in response to that a service state of the first on board unit is an active state, and information sent from the first on board unit is not received within a first preset duration, switching the service state of the first on board unit from the active state to an inactive state.

6. The method according to claim 4 or 5, further comprising:
in response to that the service state of the first on board unit is the inactive state, and the information sent from the first on board unit is not received within a second preset duration, deleting information used to record the service state of the first on board unit.

7. The method according to claim 1, further comprising:
receiving information related to a second on board unit sent from the second road side unit, wherein the second on board unit is an on board unit that moves into the service range of the second road side unit, the information related to the second on board unit includes an identification of the second on board unit and/or service data of the second on board unit.

8. The method according to claim 7, further comprising:
in response to receiving the information related to the second on board unit, setting a service state of the second on board unit to an inactive state.

9. The method according to claim 7, further comprising:
in response to receiving information sent from the second on board unit for a first time, switching a service state of the second on board unit from an inactive state to an active state.

10. The method according to claim 7, further comprising:
in response to receiving information sent from the second on board unit for a first time, sending third information to the second road side unit, wherein the third information is used to indicate the second road side unit to switch a service state of the second on board unit from an active state to an inactive state.

11. The method according to claim 7, further comprising:
sending the information related to the second on board unit to the first on board unit.

12. A vehicle-to-everything communication method, **characterized in that** the method is applied to an on board unit, and comprises:
after the on board unit moves into a service range of a first road side unit in a first communication network, receiving first information sent from the first road side unit, wherein the first information is used to indicate that there is a vehicle-to-everything service provided by a second road side unit in a second communication network, and there is an overlapped area between the service range of the first road side unit and a service range of the second road side unit;
choosing at least one of the first road side unit and the second road side unit to perform communication based on the first information.

13. The method according to claim 12, wherein
the first communication network is a PC5 network, and the second communication network is a 5G network, the first information includes an service IP address and a port number of the second road side unit; or
the first communication network is a 5G network, the second communication network is a PC5 network, and the first information includes an access configuration of a PC5 interface of the second road side unit.

14. The method according to claim 12, further comprising:
in response to choosing the second road side unit to perform communication, sending service information to the second road side unit, wherein the service information includes an identification of the on board unit.

15. A vehicle-to-everything communication method, **characterized in that** the method is applied to a first road side unit in a first communication network, and there is an overlapped area between a service range of the first road side unit and a service range of a second road side unit in a second communication network, the method comprises:
receiving first service information related to the first on board unit sent from the second road side unit;
determining whether the first on board unit meets a preset condition, wherein the preset condition includes a service state of the first on board unit being an active state;
in response to that the first on board unit meets the preset condition, discarding the first service information; or
in response to that the first on board unit does not meet the preset condition, sending the first service information to the second on board unit whose service state is an active state.

16. The method according to claim 15, wherein the preset condition further includes the first on board unit having a capability for performing communication by using both a first communication interface and a second communication interface simultaneously; wherein the first communication interface is an interface used for communication with the first road side unit, and the second communication interface is an interface used for communication with the second road side unit.

17. The method according to claim 16, further comprising:
receiving capability information of the first on board unit, wherein the capability information is used to indicate whether the first on board unit has the capability for performing communication by using both the first communication interface and the second communication interface simultaneously.

18. The method according to claim 15, further comprising:
receiving second service information sent from the first on board unit;
forwarding the second service information to the second road side unit.

19. A vehicle-to-everything communication method, **characterized in that** the method is applied to an on board unit, and comprises:
sending first service information through a first communication interface;
sending the first service information through a second communication interface;
wherein the first communication interface is an interface used for communication with a first road side unit in a first communication network, and the second communication interface is an interface used for communication with a second road side unit in a second communication network; there is an overlapped area between a service range of the first road side unit and a service range of the second road side unit.

20. The method according to claim 19, further comprising:
sending capability information through at least one of the first communication interface and the second communication interface, wherein the capability information is used to indicate whether the on board unit has a capability for performing communication by using both the first communication interface and the second communication interface simultaneously.

21. The method according to claim 19, further comprising:
receiving second service information through at least one of the first communication interface and the second communication interface;
detecting whether the second service information is service information previously sent from the on board unit itself;
in response to that the second service information is the service information previously sent from the on board unit itself, discarding the second service information.

22. A communication apparatus, **characterized by** comprising: a processor and a memory, wherein the memory is coupled to the processor, the memory is configured to store instructions executable for the processor;
wherein the processor is configured to, upon executing the instructions, enable the communication apparatus to perform the method according to any one of claims 1 to 21.

23. A computer-readable storage medium, **characterized in that** the computer-readable storage medium stores computer program instructions, wherein the computer program instructions, upon being run on a computer, enable the computer to perform the method according to any one of claims 1 to 21.
